# EUROPÄISCHE PATENTSCHRIFT

(11) **EP 2 845 974 B1**
(45) Veröffentlichungstag und Bekanntmachung des Hinweises auf die Patenterteilung: **22.04.2020**
(21) Anmeldenummer: 14184225.2
(22) Anmeldetag: 10.09.2014
(51) Int. Cl.: E05B 85/10, E05B 81/06, E05B 81/76

(54) **Abdeckklappenanordnung für eine Handgriffanordnung einer Kraftfahrzeugtür**
Cover flap assembly for a handle assembly of a motor vehicle door
Dispositif de clapet d'obturation pour un dispositif de poignée d'une porte de véhicule automobile

(30) Priorität: 10.09.2013 DE 102013109914
(43) Veröffentlichungstag der Anmeldung: 11.03.2015
(73) Patentinhaber: Brose Schliesssysteme GmbH & Co. KG, 42369 Wuppertal (DE)
(72) Erfinder: Leve, Dirk, 41470 Neuss (DE)
(74) Vertreter: Gottschald, Jan

(56) Entgegenhaltungen:
- WO-A1-2015/011218
- DE-A1- 4 217 139
- DE-A1- 10 219 634
- DE-A1-102005 003 932

## Beschreibung

Die Erfindung betrifft eine Abdeckklappenanordnung für eine Handgriffanordnung einer Kraftfahrzeugtür gemäß Anspruch 1, eine Handgriffanordnung einer Kraftfahrzeugtür gemäß Anspruch 12, eine Kraftfahrzeugtür gemäß Anspruch 13, sowie ein Verfahren für den Betrieb einer Kraftfahrzeugtür gemäß Anspruch 15.

In der Vergangenheit war die Designfreiheit bei der äußeren Gestaltung von Kraftfahrzeugen durch die Notwendigkeit mechanisch aufwändiger Handgriffanordnungen für Kraftfahrzeugtüren erheblich eingeschränkt.

Der Begriff "Kraftfahrzeugtür" ist vorliegend weit auszulegen. Dazu gehören beispielsweise Seitentüren, Heckklappen, Heckdeckel, Motorhauben, Laderaumböden o. dgl..

Eine Steigerung der obigen Designfreiheit lässt sich beispielsweise dadurch erreichen, dass die Handgriffanordnung durch eine Abdeckklappenanordnung abgedeckt wird, solange keine Betätigung der Handgriffanordnung ansteht. Die bekannte Abdeckklappenanordnung (DE 10 2005 003 932 B4), von der die Erfindung ausgeht, zeigt eine motorisch verschiebbare Abdeckklappe, die sich in eine die Handgriffanordnung abdeckende Abdeckstellung verschieben lässt. Die Handgriffanordnung weist einen bügelartigen Griffabschnitt auf, wobei die in der Freigabestellung befindliche Abdeckklappe den Eingriff von beiden Seiten des Griffabschnitts, also von oben und von unten, erlaubt. Allerdings führt die Schiebebewegung der Abdeckklappe dazu, dass der Eingriff sukzessive erst auf der einen Seite, dann auf der anderen Seite des Griffabschnitts möglich ist. Um eventuelle Wartezeiten beim Benutzer zu vermeiden, ist die Schiebebewegung der Abdeckklappe mit besonders hoher Geschwindigkeit durchzuführen, was zu einem hohen konstruktiven Aufwand führt. Weiter ist bemerkenswert, dass die über die gesamte Breite des Griffabschnitts vorgesehene Schiebebewegung eine aufwändige Linearführung erfordert, was den konstruktiven Aufwand weiter erhöht.

Der Erfindung liegt das Problem zugrunde, die bekannte Abdeckklappenanordnung derart auszugestalten und weiterzubilden, dass ein hoher Benutzungskomfort bei geringem konstruktivem Aufwand realisierbar ist.

Das obige Problem wird bei einer Abdeckklappenanordnung für eine Handgriffanordnung einer Kraftfahrzeugtür gemäß Anspruch 1 gelöst.

Wesentlich ist zunächst die Erkenntnis, dass sich eine flexible und gleichzeitig komfortable Betätigung der Handgriffanordnung mit einem Griffabschnitt und beidseits des Griffabschnitts angeordneten Eingriffsöffnungen zu einem Eingriffsbereich hin erreichen lässt. Entsprechend wird im Sinne einer zielorientierten Auslegung vorgeschlagen, dass die Abdeckklappenanordnung zwei Abdeccklappen aufweist, die jeweils einer Eingriffsöffnung zugeordnet sind. Im eingebauten Zustand sind die Abdeckklappen jeweils zwischen einer Abdeckstellung, in der sie jeweils eine Eingriffsöffnung abdecken, und in einer Freigabestellung, in der sie jeweils eine Eingriffsöffnung freigeben, verstellbar.

Ein Träger zur Aufnahme zumindest eines Teils der Komponenten der Abdeckklappenanordnung und eine Antriebsanordnung zur motorischen Verstellung der Abdeckklappen sind vorgesehen. Die Antriebsanordnung weist einen Antriebsmotor und ein dem Antriebsmotor nachgeschaltetes Vorschubgetriebe auf. Der Träger nimmt die Abdeckklappen sowie die gesamte Antriebsanordnung auf.

Interessant bei der vorschlagsgemäßen Lösung ist zunächst einmal die Tatsache, dass eine Realisierung mit besonders geringem konstruktivem Aufwand möglich ist. Derartige Abdeckklappen lassen sich als verschwenkbare Klappen leicht umsetzen. Interessant ist weiter, dass beide Abdeckklappen ohne Weiteres gleichzeitig in die Freigabestellung verstellbar sind. Dadurch ergibt sich bei entsprechender Auslegung eine sofortige Verfügbarkeit beider Eingriffsseiten des Griffabschnitts.

Auch im Hinblick auf die resultierende Designfreiheit ist die vorschlagsgemäße Lösung vorteilhaft. Selbst in der Abdeckstellung sind die Eingriffsöffnungen bei geeigneter Auslegung wenig störend, da sie auf das unbedingt notwendige Maß reduziert werden können. Besonders interessant ist dabei die Tatsache, dass die Formgebung der Eingriffsöffnungen selbst ein designerisches Gestaltungsmerkmal darstellen kann.

Die Designfreiheit wird gemäß Anspruch 2 weiter dadurch erhöht, dass die Abdeckklappen in der Abdeckstellung jeweils im wesentlichen Plan mit einer Außen-Wandfläche, insbesondere mit einer Außen-Wandfläche einer Kraftfahrzeugtür, angeordnet sind. Bei dieser Ausgestaltung sind die Abdeckklappen kaum wahrnehmbar solange sie in der Abdeckstellung stehen.

Bei den weiter bevorzugten Ausgestaltungen gemäß den Ansprüchen 6 oder 7 ist der Eingriffsbereich durch eine Griffmulde begrenzt, wobei die Griffmulde in einer Variante Anlenköffnungen aufweist, durch die hindurch die Abdeckklappen angelenkt sind. Bei den besonders bevorzugten Ausgestaltungen gemäß Anspruch 7 decken die Abdeckklappen in der Freigabestellung die Anlenköffnungen in der Griffmulde ab, was insbesondere im Sinne eines Schutzes gegen Missbrauch vorteilhaft ist.

Bei der besonders bevorzugten Ausgestaltung gemäß Anspruch 8 sind die beiden Abdeckklappen miteinander bewegungsgekoppelt. Der Begriff "bewegungsgekoppelt" ist vorliegend weit zu verstehen. Er umfasst sowohl eine mechanische Bewegungskopplung, als auch eine steuerungstechnische Bewegungskopplung. Im Ergebnis ist hiermit gemeint, dass beide Abdeckklappen stets gleichzeitig verstellt werden.

Vorschlagsgemäß ist ferner eine Antriebsanordnung zur motorischen Verstellung der Abdeckklappen vorgesehen, wobei in einer besonders bevorzugten Variante ein als Zahnetangengetriebe ausgestaltetes Vorschubgetriebe Anwendung findet. Nach einer weiteren Lehre gemäß Anspruch 12 wird eine Handgriffanordnung einer Kraftfahrzeugtür mit einer Abdeckklappenanordnung nach einem der vorhergehenden Ansprüche beansprucht.

Nach einer weiteren Lehre gemäß Anspruch 13 wird eine Kraftfahrzeugtür eines Kraftfahrzeugs mit einer Tragstruktur und einer an der Tragstruktur angeordneten Türaußenhaut sowie mit der obigen Handgriffanordnung beansprucht. Nach einer weiteren Lehre gemäß Anspruch 15, der eigenständige Bedeutung zukommt, wird ein Verfahren für den Betrieb einer erfindungsgemäßen Abdeckklappenanordnung beansprucht.

Wesentlich nach dieser weiteren Lehre ist, dass mittels einer Steuerungseinrichtung das Auftreten einer vorbestimmten Benutzeraktion überwacht wird und dass bei der Erfassung der Benutzeraktion, ggf. nach Prüfung weiterer Bedingungen, wie einer Authentifizierung des Benutzers, die Abdeckklappen der Abdeckklappenanordnung mittels einer Antriebsanordnung motorisch in ihre jeweilige Freigabestellung verstellt werden.

Vorschlagsgemäß ist es also so, dass eine vorbestimmte Benutzeraktion, bei der es sich beispielsweise um die Annäherung der Hand eines Benutzers an die Abdeckklappenanordnung handeln kann, eine Verstellung der Abdeckklappen in ihre jeweiligen Freigabestellungen auslöst. Dadurch, dass die Verstellung der Abdeckklappen einer vorschlagsgemäßen Abdeckklappenanordnung auf besonders einfache Weise gleichzeitig erfolgen kann, kann mit dem vorschlagsgemäßen Verfahren die nahezu sofortige Verfügbarkeit beider Eingriffsseiten des Eingriffsabschnitts erreicht werden.

Im Folgenden wird die Erfindung anhand einer lediglich ein Ausführungsbeispiel darstellenden Zeichnung näher erläutert. In der Zeichnung zeigt
- Fig. 1: eine vorschlagsgemäße Kraftfahrzeugtür eines Kraftfahrzeugs mit einer vorschlagsgemäßen Handgriffanordnung und einer vorschlagsgemäßen Abdeckklappenanordnung,
- Fig. 2: die Abdeckklappenanordnung gemäß Fig. 1 im demontierten Zustand a) bei in der Abdeckstellung befindlichen Abdeckklappen und b) bei in der Freigabestellung befindlichen Abdeckklappen und
- Fig. 3: die Abdeckklappenanordnung gemäß Fig. 2 in einer Schnittdarstellung entlang der Schnittlinie III-III a) bei in der Abdeckstellung befindlichen Abdeckklappen und b) bei in der Freigabestellung befindlichen Abdeckklappen.

Die vorschlagsgemäße Abdeckklappenanordnung 1 ist einer Handgriffanordnung 2 einer Kraftfahrzeugtür 3 zugeordnet. Hinsichtlich der weiten Auslegung des Begriffs "Kraftfahrzeugtür" darf auf den einleitenden Teil der Beschreibung verwiesen werden.

Die Handgriffanordnung 2 weist einen hier und vorzugsweise länglichen Griffabschnitt 4 mit einem Eingriffsbereich 5 und zwei beidseits des Griffabschnitts 4 angeordnete Eingriffsöffnungen 6, 7 zum Eingriffsbereich 5 hin auf.

Mit den beidseits des Griffabschnitts 4 angeordneten Eingriffsöffnungen 6,7 ergibt sich für den Benutzer die Möglichkeit der Betätigung des Griffabschnitts 4 von zwei Eingriffsseiten des Griffabschnitts 4 aus.

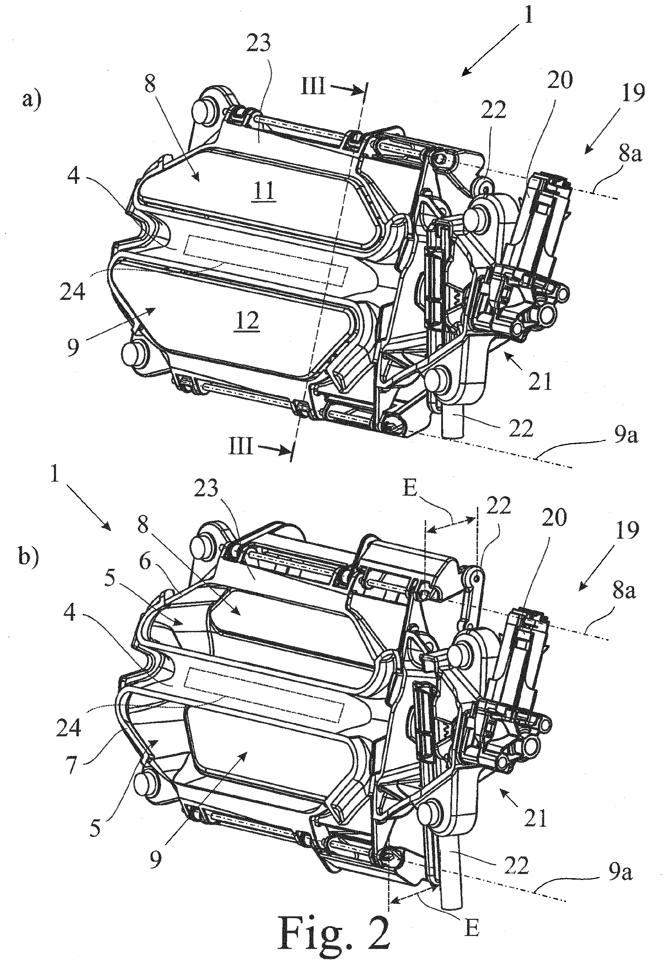

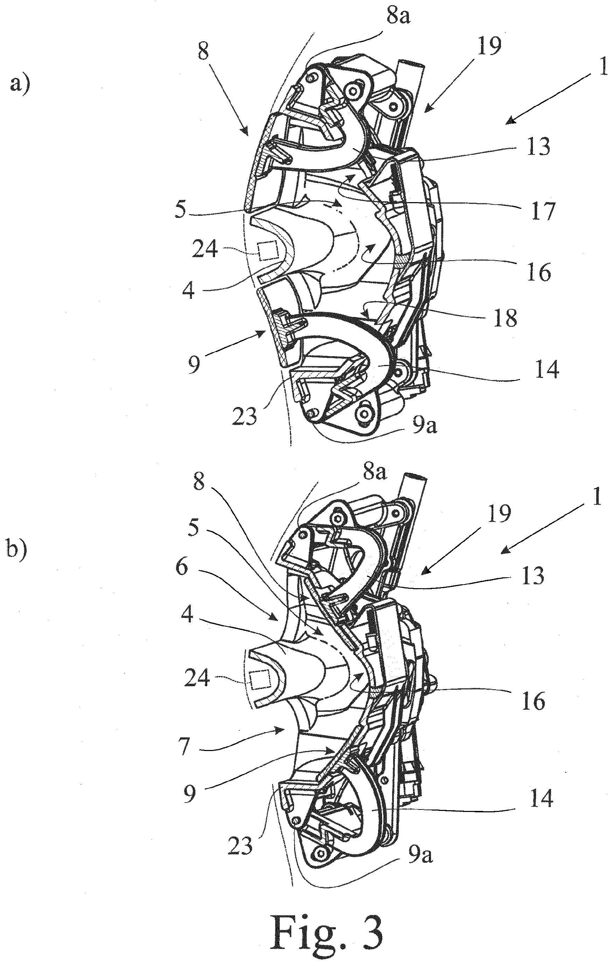

Die Abdeckklappenanordnung 1 weist zwei Abdeckklappen 8, 9 auf, die jeweils zwischen einer Abdeckstellung (Fig. 2a, 3a) und einer Freigabestellung (Fig. 2b, 3b) verstellbar sind. Im eingebauten Zustand decken die in der Abdeckstellung befindlichen Abdeckklappen 8, 9 jeweils eine Eingriffsöffnung 6, 7 ab. In bevorzugter, hier nicht dargestellter Ausführungsform handelt es sich bei der Abdeckung um eine abdichtende Abdeckung. Vorzugsweise ist der Rand der jeweiligen Eingriffsöffnung 6, 7 dann mit einer entsprechenden Dichtung, insbesondere einer Dichtlippe, ausgestattet. Grundsätzlich kann es aber auch vorgesehen sein, dass die Abdeckklappen 8, 9 in der Abdeckstellung überlappend auf Randbereichen der Eingriffsöffnungen 6, 7 aufliegen.

Die in der Freigabestellung befindlichen Abdeckklappen 8, 9 geben im eingebauten Zustand jeweils eine Eingriffsöffnung 6, 7 frei, so dass der Benutzer mit seiner Hand wahlweise in eine der Eingriffsöffnungen 6, 7 eingreifen, in den Eingriffsbereich 5 eintauchen und dabei den Griffabschnitt 4 betätigen kann.

Eine besonders hohe Designfreiheit in obigem Sinne ergibt sich bei dem dargestellten Ausführungsbeispiel dadurch, dass die Abdeckklappen 8, 9 in der Abdeckstellung (Fig. 2a, 3a) im eingebauten Zustand jeweils im Wesentlichen plan mit einer Außen-Wandfläche 10 angeordnet sind. Bei geeigneter Auslegung tritt die Handgriffanordnung 2 dann kaum in Erscheinung.

Eine Zusammenschau der Fig. 2a und 2b zeigt, dass die beiden Abdeckklappen 8, 9 bei der Verstellung von der jeweiligen Abdeckstellung in die jeweilige Freigabestellung in den Eingriffsbereich 5 eintauchen, hier einschwenken. Die Richtung der Bewegung der Abdeckklappen 8, 9 in die jeweilige Freigabestellung entspricht im Wesentlichen der Eingriffsrichtung der Hand des Benutzers. Dadurch, dass sich die Abdeckklappen 8, 9 und die Hand des Benutzers im Wesentlichen in gleicher Richtung bewegen, lässt sich die Gefahr eines Einklemmens der Hand des Benutzers beim Eingreifen in den Eingriffsbereich 5 weitgehend reduzieren.

Grundsätzlich können die Verstellbewegungen der Abdeckklappen 8, 9 eine rotatorische Komponente und/oder eine lineare Komponente aufweisen. Hier und vorzugsweise ist es allerdings so, dass die beiden Abdeckklappen 8, 9 ausschließlich rotatorische Verstellbewegungen, insbesondere Schwenkbewegungen ausführen.

Entsprechend ist es weiter vorzugsweise so, dass den Abdeckklappen 8, 9 jeweils eine Schwenkachse 8a, 9a zugeordnet ist und dass die Abdeckklappen 8, 9 entsprechend schwenkend verstellbar sind.

Interessant bei dem dargestellten Ausführungsbeispiel ist die Tatsache, dass die Schwenkachsen 8a, 9a bezogen auf den Griffabschnitt 4 gegenüberliegend angeordnet sind. Weiter vorzugsweise sind die Schwenkachsen 8a, 9a der Abdeccklappen 8, 9 jeweils an einem dem Griffabschnitt 4 abgewandten Randbereich der jeweiligen Eingriffsöffnung 6, 7 angeordnet.

Bei dem dargestellten und insoweit bevorzugten Ausführungsbeispiel sind die Schwenkachsen 8a, 9a der Abdeckklappen 8, 9 im Wesentlichen parallel zueinander ausgestaltet, so dass die Verstellbewegungen der Abdeckklappen 8, 9 weitgehend symmetrisch sind. Dadurch geht eine Verstellung der Abdeckklappen 8,9 in die jeweilige Freigabestellung mit einem eleganten Gesamteindruck einher, soweit die Verstellung gleichzeitig erfolgt. Die gleichzeitige Verstellung der Abdeckklappen 8, 9 wird weiter unten noch im Detail erläutert.

Die Abdeckklappen 8,9 sind hier von einem konstruktiv besonders einfachen Aufbau. Für die Abdeckung der jeweiligen Eingriffsöffnung 6, 7 sind die Abdeckklappen 8, 9 mit einem plattenartigen Klappenelement 11, 12 ausgestattet, dessen Außenkontur im Wesentlichen der Innenkontur der jeweiligen Eingriffsöffnung 6, 7 entspricht. Zur Anlenkung der Abdeckklappen 8, 9 an den jeweiligen Schwenkachsen 8a, 9a sind die Klappenelemente 11, 12 jeweils an einer Schwinge 13, 14 befestigt. Die Schwingen 13, 14 sind wiederum an den Schwenkachsen 8a, 9a angelenkt.

Die Klappenelemente 11, 12 sind vorzugsweise an den obigen Schwingen 13, 14 formschlüssig befestigt, insbesondere angeklipst, so dass im Reparaturfall ein einfacher Austausch der Klappenelemente 11, 12 möglich ist.

Der Eingriffsbereich 5 ist zum Kraftfahrzeuginnenraum 15 bzw. zu einem Türinnenraum hin durch eine Griffmulde 16 begrenzt. Grundsätzlich kann es vorgesehen sein, dass die Abdeckklappen 8, 9 mit ihren Schwingen 13, 14 stets innerhalb des Eingriffsbereichs 5 angeordnet sind. Hier und vorzugsweise ist es allerdings so, dass die Griffmulde 16 Anlenköffnungen 17, 18 aufweist, durch die hindurch die Abdeckklappen 8, 9 hier mit den Schwingen 13, 14 angelenkt sind.

Fig. 3b zeigt, dass die Abdeckklappen 8, 9 in der Freigabestellung jeweils eine Anlenköffnung 17, 18 in der Griffmulde 16 abdecken. Vorzugsweise handelt es sich hierbei um eine abdichtende Abdeckung. Dies ist dadurch realisiert, dass die Abdeckklappen 8, 9 in der Freigabestellung überlappend auf den Randbereichen der Anlenköffnungen 17, 18 aufliegen.

Es lässt sich der Darstellung gemäß Fig. 3b ferner entnehmen, dass die Abdeccklappen 8, 9 in der Freigabestellung jeweils im Wesentlichen plan mit einer Wandfläche der Griffmulde 16 angeordnet sind. Dies ist nicht nur für den gestalterischen Eindruck vorteilhaft, sondern auch für die Vermeidung eines missbräuchlichen Eingriffs in die Anlenköffnungen 17, 18.

In einer Schnittebene gesehen, die senkrecht zumindest zu einer der Schwenkachsen 8a, 9a der Abdeckklappen 8, 9 ausgerichtet ist, verläuft der die Anlenköffnungen 17, 18 aufweisende, durch die Griffmulde 16 gebildete Wandabschnitt bezogen auf den Fahrzeuginnenraum 15 konvex, während der die Eingriffsöffnungen 6, 7 aufweisende Wandabschnitt bezogen auf den Fahrzeuginnenraum 15 konkav verläuft. Interessanterweise sind die Schwenkachsen 8a, 9a der Abdeccklappen 8, 9 in einer Ebene angeordnet, die durch den Eingriffsbereich 5 hindurch verläuft. Dadurch ist es möglich, dass sowohl die Eingriffsöffnungen 6, 7 als auch die Anlenköffnungen 17, 18 durch einfache Schwenkbewegungen von den Abdeckklappen 8, 9 erreichbar sind.

Von besonderer Bedeutung für den Bedienkomfort ist vorliegend, dass die beiden Abdeckklappen 8, 9 miteinander bewegungsgekoppelt sind. Es wurde schon darauf hingewiesen, dass es sich hier um eine mechanische, aber auch um eine elektronische Bewegungskopplung handeln kann.

In besonders bevorzugter Ausgestaltung sind die beiden Abdeckklappen 8, 9 derart miteinander bewegungsgekoppelt, dass sie ihre Abdeckstellungen und/oder ihre Freigabestellungen jeweils gleichzeitig erreichen. Weiter vorzugsweise ist es so, dass die Schwenkrichtungen der beiden Abdeckklappen 8, 9 stets zueinander entgegengesetzt sind. Dies ist am besten der Darstellung gemäß Fig. 3 zu entnehmen. Eine Verstellung der Abdeckklappen 8, 9 von der Abdeckstellung (Fig. 3a) in die Freigabestellung (Fig. 3b) ist bei der Abdeckklappe 8 mit einem Verschwenken entgegen dem Uhrzeigersinn und bei der Abdeckklappe 9 mit einem Verschwenken im Uhrzeigersinn verbunden.

Um die Designfreiheit bei der äußeren Gestaltung des Kraftfahrzeugs weiter zu erhöhen, ist es weiter vorzugsweise vorgesehen, dass sich die Verstellwege der beiden Abdeckklappen 8, 9 zwischen der jeweiligen Abdeckstellung und der jeweiligen Freigabestellung betragsmäßig voneinander unterscheiden können. Alternativ oder zusätzlich kann es vorgesehen sein, dass die Abdeckklappen 8, 9 unterschiedliche Klappengeometrien, insbesondere unterschiedliche Klappenflächen der Klappenelemente 11, 12, aufweisen.

Im Sinne einer besonders komfortablen Betätigung ist die dargestellte Abdeccklappenanordnung 1 mit einer Antriebsanordnung 19 zur motorischen Verstellung der Abdeckklappen 8, 9 ausgestattet. Fig. 2 zeigt, dass die Antriebsanordnung 19 hier einen Antriebsmotor 20 und ein dem Antriebsmotor 20 nachgeschaltetes Vorschubgetriebe 21 zur Erzeugung von Antriebsbewegungen aufweist. Eine besonders robuste Ausgestaltung ergibt sich bei der in Fig. 2 dargestellten und insoweit bevorzugten Konstruktion dadurch, dass das Vorschubgetriebe 21 als Zahnstangengetriebe ausgestaltet ist, und, vorzugsweise, dass das Vorschubgetriebe 21 zwei Antriebs-Zahnstangen 22 aufweist, die zur Übertragung der Antriebsbewegungen jeweils exzentrisch an den Schwenkachsen 8a, 9a der Abdeckklappen 8, 9 angreifen. Die Exzentrizität der Anlenkung ist in Fig. 2 mit dem Bezugszeichen "E" angedeutet. Grundsätzlich sind andere Arten von Antriebsanordungen für die vorschlagsgemäße Abdeckklappenanordnung 1 denkbar. Beispielsweise kann das Vorschubgetriebe 21 als Stirnradgetriebe, als Seilgetriebe o. dgl. ausgestaltet sein.

Die dargestellte Abdeckklappenanordnung 1 ist insoweit modular aufgebaut, als sie als funktionsfertige Einheit von innen an eine Kraftfahrzeugtür 3 angesetzt werden kann. Hierfür ist es vorteilhaft, dass ein Träger 23 zur Aufnahme zumindest eines Teils der Komponenten der Abdeckklappenanordnung 1 vorgesehen ist. Hier nimmt der Träger 23 die Abdeckklappen 8, 9 sowie die gesamte Antriebsanordnung 19 auf. Ferner ist es hier und vorzugsweise so, dass der Träger 23 einen die jeweilige Betätigungskraft aufnehmenden Bestandteil des Griffabschnitts 4 bereitstellt. Fig. 3 zeigt, dass der Griffabschnitt 4 entsprechend robust ausgelegt ist, so dass die Kraftfahrzeugtür 3 über den Eingriff mit dem Griffabschnitt 4 bewegt werden kann.

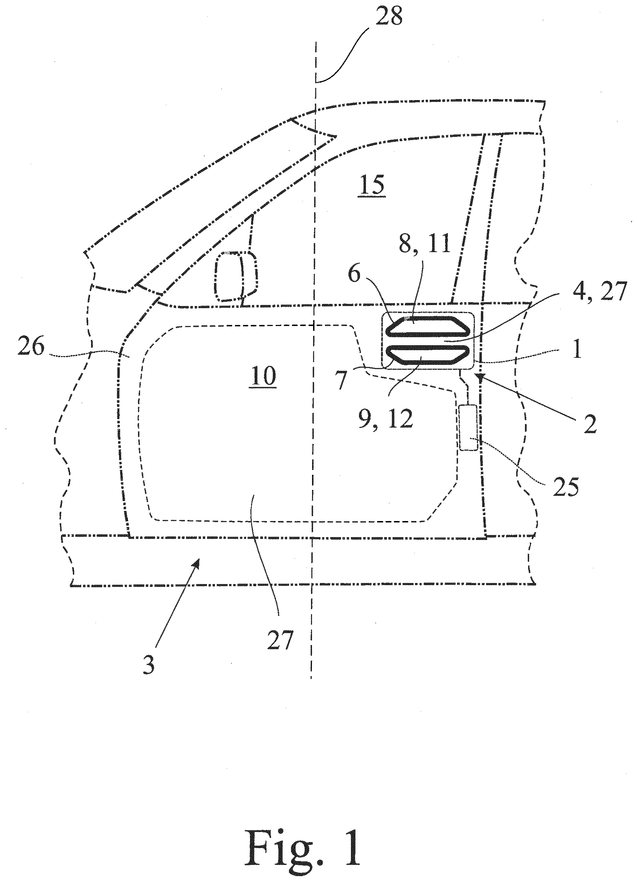

Die Abdeckklappenanordnung 1 kann mit einer Sensoranordnung 24 zur Erfassung einer vorbestimmten Benutzeraktion wie der Annäherung der Hand eines Benutzers an die Kraftfahrzeugtür 3 ausgestattet sein. In Fig. 2 und 3 ist eine solche Sensoranordnung 24 im Griffabschnitt 4 untergebracht. Bei der Erfassung der Benutzeraktion kann, ggf. nach Prüfung weiterer Bedingungen wie einer Authentifizierung des Benutzers, eine Ansteuerung der Antriebsanordnung 19 für die Verstellung der Abdeckklappen 8, 9 in die Freigabestellung vorgesehen sein. Weiter kann es vorteilhaft sein, dass die Sensoranordnung 24 oder eine weitere Sensoranordnung erfasst, ob ein Eingriff der Hand des Benutzers in den Eingriffsbereich 5 mit einer anschließenden Betätigung des Griffabschnitts 4 stattfindet, was vorzugsweise mit dem Öffnen der Kraftfahrzeugtür 3 einhergeht. Das Öffnen der Kraftfahrzeugtür 3 erfolgt vorzugsweise durch die Ansteuerung eines Kraftfahrzeugschlosses 25, das in Fig. 1 lediglich angedeutet ist.

Bei dem dargestellten und insoweit bevorzugten Ausführungsbeispiel ist der Griffabschnitt 4 unbeweglich ausgestaltet. Eine Ansteuerung des Kraftfahrzeugschlosses 25 für das Öffnen der Kraftfahrzeugtür erfolgt hier sensorisch. Grundsätzlich kann es aber auch vorteilhaft sein, dass der Griffabschnitt 4 beweglich ausgestaltet ist oder eine bewegliche Komponente aufweist, um das Öffnen der Kraftfahrzeugtür 3 über das Kraftfahrzeugschloss 25 mechanisch oder elektrisch auszulösen.

Nach einer weiteren bevorzugten Lehre wird die Handgriffanordnung 2 der Kraftfahrzeugtür 3 mit einer erfindungsgemäßen Abdeckklappenanordnung beansprucht.

Die vorschlagsgemäße Handgriffanordnung 2 weist, wie oben angesprochen, einen Griffabschnitt 4 mit einem Eingriffsbereich 5 und zwei beidseits des Griffabschnitts 4 angeordnete Eingriffsöffnungen 6, 7 zum Eingriffsbereich 5 hin auf. Die vorschlagsgemäße Handgriffanordnung 2 ist ferner mit einer erfindungsgemäßen Abdeckklappenanordnung 1 zur Abdeckung der Eingriffsöffnungen 6, 7 ausgestattet.

Nach einer weiteren bevorzugten Lehre wird die Kraftfahrzeugtür 3 mit einer Tragstruktur 26 und einer an der Tragstruktur 26 angeordneten Türaußenhaut 27 sowie mit der oben vorgeschlagenen Handgriffanordnung 2 beansprucht. Auf alle Ausführungen zu der vorschlagsgemäßen Handgriffanordnung 2 sowie der vorschlagsgemäßen Abdeckklappenanordnung 1 darf verwiesen werden.

In besonders bevorzugter Ausgestaltung ist es so, dass die Türaußenhaut 27 und/oder die Tragstruktur 26 einen die Betätigungskraft, also die von der Hand des Benutzers auf die Kraftfahrzeugtür 3 einwirkende Kraft, aufnehmenden Bestandteil des Griffabschnitts 4 bereitstellt. Denkbar ist aber auch, dass die Türaußenhaut 27 und/oder die Tragstruktur 26 lediglich die beiden Eingriffsöffnungen 6, 7 bereitstellt, an die die Abdeckklappenanordnung 1 vom Türinnenraum aus angesetzt ist.

Bei der vorschlagsgemäßen Kraftfahrzeugtür 3 ist es weiter vorzugsweise so, dass die Abdeckklappen 8, 9 bezogen auf die Hochachse 28 des Kraftfahrzeugs oberhalb und unterhalb des Griffabschnitts 4 angeordnet sind. Dies erlaubt den Eingriff des Benutzers in den Eingriffsbereich 5 von einem Bereich oberhalb des Griffabschnitts 4 und einen Bereich unterhalb des Griffabschnitts 4, was insgesamt zu einer hohen Benutzungsflexibilität und im Ergebnis zu einem hohen Benutzungskomfort führt.

Nach einer weiteren Lehre, der ebenfalls eigenständige Bedeutung zukommt, wird ein Verfahren für den Betrieb einer vorschlagsgemäßen Abdeckklappenanordnung 1 beansprucht. Wesentlich ist, dass mittels einer Sensoreinrichtung das Auftreten einer vorbestimmten, oben angesprochenen Benutzeraktion überwacht wird. Eine solche vorbestimmte Benutzeraktion kann beispielsweise die Annäherung der Hand des Benutzers an die Abdeckklappenanordnung 1 sein. Bei der Erfassung der Benutzeraktion werden die Abdeckklappen 8, 9 der Abdeckklappenanordnung 1, ggf. nach Prüfung weiterer Bedingungen wie einer Authentifizierung des Benutzers, mittels einer obigen Antriebsanordnung 19 motorisch in ihre jeweilige Freigabestellung verstellt. Im Falle der gleichzeitigen Verstellung der beiden Abdeckklappen 8, 9 stellt sich die oben angesprochene, hohe Benutzungsflexibilität ein. Die Rückstellung der Abdeckklappen 8, 9 in die Abdeckstellung erfolgt vorzugsweise nach Ablauf einer vorbestimmten Verzögerungszeit. Eine andere Vorschrift für die Rückstellung der Abdeckklappen 8, 9 ist denkbar.

## Patentansprüche

1. Abdeckklappenanordnung für eine Handgriffanordnung (2) einer Kraftfahrzeugtür (3), wobei die Handgriffanordnung (2) einen insbesondere länglichen Griffabschnitt (4) mit einem Eingriffsbereich (5) und zwei beidseits des Griffabschnitts (4) angeordnete Eingriffsöffnungen (6, 7) zum Eingriffsbereich (5) hin aufweist und wobei die Abdeckklappenanordnung (1) zwei Abdeckklappen (8, 9) aufweist, die jeweils zwischen einer Abdeckstellung, in der sie im eingebauten Zustand jeweils eine Eingriffsöffnung (6, 7), insbesondere abdichtend, abdecken, und einer Freigabestellung, in der sie im eingebauten Zustand jeweils eine Eingriffsöffnung (6, 7) freigeben, verstellbar sind, wobei ein Träger (23) zur Aufnahme zumindest eines Teils der Komponenten der Abdeckklappenanordnung (1) vorgesehen ist, wobei eine Antriebsanordnung (19) zur motorischen Verstellung der Abdeckklappen (8, 9) vorgesehen ist,
wobei die Antriebsanordnung (19) einen Antriebsmotor (20) und ein dem Antriebsmotor (20) nachgeschaltetes Vorschubgetriebe (21) aufweist und wobei der Träger (23) die Abdeckklappen (8, 9) sowie die gesamte Antriebsanordnung (19) aufnimmt.

2. Abdeckklappenanordnung nach Anspruch 1,
**dadurch gekennzeichnet, dass** die Abdeckklappen (8, 9) in der Abdeckstellung im eingebauten Zustand jeweils im Wesentlichen plan mit einer Außen-Wandfläche (10) angeordnet sind.

3. Abdeckklappenanordnung nach einem der vorhergehenden Ansprüche, **dadurch gekennzeichnet, dass** die beiden Abdeckklappen (8, 9) bei der Verstellung von der jeweiligen Abdeckstellung in die jeweilige Freigabestellung in den Eingriffsbereich (5) eintauchen, insbesondere einschwenken.

4. Abdeckklappenanordnung nach einem der vorhergehenden Ansprüche, **dadurch gekennzeichnet, dass** die Verstellbewegungen der Abdeckklappen (8, 9) eine rotatorische Komponente und/oder eine lineare Komponente aufweisen.

5. Abdeckklappenanordnung nach einem der vorhergehenden Ansprüche, **dadurch gekennzeichnet, dass** den Abdeckklappen (8, 9) jeweils eine Schwenkachse (8a, 9a) zugeordnet ist und dass die Abdeckklappen (8, 9) entsprechend schwenkend verstellbar sind, vorzugsweise, dass die Schwenkachsen (8a, 9a) bezogen auf den Griffabschnitt (4) gegenüberliegend angeordnet sind, weiter vorzugsweise, dass die Schwenkachsen (8a, 9a) der Abdeckklappen (8, 9) jeweils an einem dem Griffabschnitt (4) abgewandten Randbereich der jeweiligen Eingriffsöffnung (6, 7) angeordnet sind.

6. Abdeckklappenanordnung nach einem der vorhergehenden Ansprüche, **dadurch gekennzeichnet, dass** der Eingriffsbereich (5) durch eine Griffmulde (16) begrenzt ist, vorzugsweise, dass die Griffmulde (16) Anlenköffnungen (17, 18) aufweist, durch die hindurch die Abdeckklappen (8, 9) angelenkt sind.

7. Abdeckklappenanordnung nach Anspruch 6, **dadurch gekennzeichnet, dass** die Abdeckklappen (8, 9) in der Freigabestellung jeweils eine Anlenköffnung (17, 18) in der Griffmulde (16), insbesondere abdichtend, abdecken, und/oder, dass die Abdeckklappen (8, 9) in der Freigabestellung jeweils im Wesentlichen plan mit einer Wandfläche der Griffmulde (16) angeordnet sind.

8. Abdeckklappenanordnung nach einem der vorhergehenden Ansprüche, **dadurch gekennzeichnet, dass** die beiden Abdeckklappen (8, 9) miteinander bewegungsgekoppelt sind, vorzugsweise, dass die beiden Abdeckklappen (8, 9) derart miteinander bewegungsgekoppelt sind, dass sie ihre Abdeckstellungen und/oder ihre Freigabestellungen jeweils gleichzeitig erreichen, weiter vorzugsweise, dass die Schwenkrichtungen der beiden Abdeckklappen (8, 9) stets zueinander entgegengesetzt sind.

9. Abdeckklappenanordnung nach einem der vorhergehenden Ansprüche, **dadurch gekennzeichnet, dass** sich die Verstellwege der beiden Abdeckklappen (8, 9) zwischen der jeweiligen Abdeckstellung und der jeweiligen Freigabestellung betragsmäßig voneinander unterscheiden, und/oder, dass die Abdeckklappen (8, 9) unterschiedliche Klappengeometrien, insbesondere unterschiedliche Klappenflächen, aufweisen.

10. Abdeckklappenanordnung nach einem der vorhergehenden Ansprüche, **dadurch gekennzeichnet, dass** das Vorschubgetriebe (21) als Zahnstangengetriebe ausgestaltet ist, vorzugsweise, dass das Vorschubgetriebe (21) zwei Antriebs-Zahnstangen (22) aufweist, die zur Übertragung der Antriebsbewegungen jeweils exzentrisch an den Schwenkachsen (8a, 9a) der Abdeckklappen (8, 9) angreifen.

11. Abdeckklappenanordnung nach einem der vorhergehenden Ansprüche, **dadurch gekennzeichnet, dass** der Träger (23) einen die Betätigungskraft aufnehmenden Bestandteil des Griffabschnitts (4) bereitstellt, und/oder, dass der Träger (23) die den Eingriffsbereich (5) begrenzende Griffmulde (16) bereitstellt.

12. Handgriffanordnung einer Kraftfahrzeugtür, wobei ein Griffabschnitt (4) mit einem Eingriffsbereich (5) und zwei beidseits des Griffabschnitts (4) angeordnete Eingriffsöffnungen (6, 7) zum Eingriffsbereich (5) hin sowie eine Abdeccklappenanordnung (1) zur Abdeckung der Eingriffsöffnungen (6, 7) nach einem der vorhergehenden Ansprüche als Teil der Handgriffanordnung vorgesehen sind.

13. Kraftfahrzeugtür mit einer Tragstruktur (26) und mit einer an der Tragstruktur (26) angeordneten Türaußenhaut (27) sowie mit einer Handgriffanordnung (2) nach Anspruch 12.

14. Kraftfahrzeugtür nach Anspruch 13, **dadurch gekennzeichnet, dass** die Türaußenhaut (27) und/oder die Tragstruktur (26) einen die Betätigungskraft aufnehmenden Bestandteil des Griffabschnitts (4) bereitstellt, und/oder, dass die Abdeckklappen (8, 9) bezogen auf die Hochachse (28) des Kraftfahrzeugs oberhalb und unterhalb des Griffabschnitts (4) angeordnet sind.

15. Verfahren für den Betrieb einer Abdeckklappenanordnung (1) nach einem der Ansprüche 1 bis 11, **dadurch gekennzeichnet, dass** mittels einer Sensoreinrichtung (24) das Auftreten einer vorbestimmten Benutzeraktion, insbesondere der Annäherung der Hand des Benutzers an die Abeckklappenanordnung (1), überwacht wird und dass bei der Erfassung der Benutzeraktion, ggf. nach Prüfung weiterer Bedingungen, wie einer Authentifizierung des Benutzers, die Abdeckklappen (8, 9) der Abdeckklappenanordnung (1) mittels einer Antriebsanordnung (19), insbesondere gleichzeitig, motorisch in ihre jeweilige Freigabestellung verstellt werden.

## Claims

1. Cover flap arrangement for a handle arrangement (2) of a motor vehicle door (3), the handle arrangement (2) having an, in particular, elongate handle section (4) with a gripping region (5) and two gripping openings (6, 7) which are arranged on both sides of the handle section (4) towards the gripping region (5), and the cover flap arrangement (1) having two cover flaps (8, 9) which can be adjusted in each case between a covering position, in which, in the installed state, they in each case cover a gripping opening (6, 7), in particular sealingly, and an exposing position, in which, in the installed state, they in each case expose a gripping opening (6, 7), a support (23) being provided for accommodating at least part of the components of the cover flap arrangement (1), a drive arrangement (19) being provided for the motorized adjustment of the cover flaps (8, 9),
the drive arrangement (19) having a drive motor (20) and an advancing mechanism (21) which is connected downstream of the drive motor (20), and the support (23) accommodating the cover flaps (8, 9) and the entire drive arrangement (19).

2. Cover flap arrangement according to Claim 1, **characterized in that**, in the covering position, the cover flaps (8, 9) are arranged, in the installed state, in each case in a substantially planar manner with an outer wall surface (10).

3. Cover flap arrangement according to either of the preceding claims, **characterized in that** the two cover flaps (8, 9) dip, in particular pivot, into the gripping region (5) during the adjustment from the respective covering position into the respective exposing position.

4. Cover flap arrangement according to one of the preceding claims, **characterized in that** the adjusting movements of the cover flaps (8, 9) have a rotational component and/or a linear component.

5. Cover flap arrangement according to one of the preceding claims, **characterized in that** the cover flaps (8, 9) are in each case assigned a pivot axis (8a, 9a), and **in that** the cover flaps (8, 9) can be adjusted in a correspondingly pivoting manner, preferably **in that** the pivot axes (8a, 9a) are arranged so as to lie opposite in relation to the handle section (4), and further preferably **in that** the pivot axes (8a, 9a) of the cover flaps (8, 9) are arranged in each case on an edge region of the respective gripping opening (6, 7), which edge region faces away from the handle section (4).

6. Cover flap arrangement according to one of the preceding claims, **characterized in that** the gripping region (5) is delimited by a recessed grip (16), and preferably **in that** the recessed grip (16) has articulation openings (17, 18), through which the cover flaps (8, 9) are articulated.

7. Cover flap arrangement according to Claim 6, **characterized in that**, in the exposing position, the cover flaps (8, 9) in each case cover an articulation opening (17, 18) in the recessed grip (16), in particular sealingly, and/or **in that**, in the exposing position, the cover flaps (8, 9) are arranged in each case in a substantially planar manner with a wall surface of the recessed grip (16).

8. Cover flap arrangement according to one of the preceding claims, **characterized in that** the two cover flaps (8, 9) are movement-coupled to one another, preferably **in that** the two cover flaps (8, 9) are movement-coupled to one another in such a way that they in each case reach their covering positions and/or their exposing positions at the same time, and further preferably in that the pivoting directions of the two cover flaps (8, 9) are always opposed to one another.

9. Cover flap arrangement according to one of the preceding claims, **characterized in that** the adjusting travels of the two cover flaps (8, 9) between the respective covering position and the respective exposing position differ from one another in terms of magnitude, and/or **in that** the cover flaps (8, 9) have different flap geometries, in particular different flap surfaces.

10. Cover flap arrangement according to one of the preceding claims, **characterized in that** the advancing mechanism (21) is configured as a rack and pinion gear mechanism, preferably **in that** the advancing mechanism (21) has two drive racks (22) which in each case act eccentrically on the pivot axes (8a, 9a) of the cover flaps (8, 9) in order to transmit the drive movements.

11. Cover flap arrangement according to one of the preceding claims, **characterized in that** the support (23) provides a constituent part of the handle section (4), which constituent part absorbs the actuating force, and/or **in that** the support (23) provides the recessed grip (16) which delimits the gripping region (5) .

12. Handle arrangement of a motor vehicle door, a handle section (4) with a gripping region (5) and two gripping openings (6, 7) which are arranged on both sides of the handle section (4) towards the gripping region (5), and a cover flap arrangement (1) for covering the gripping openings (6, 7) according to one of the preceding claims being provided as part of the handle arrangement.

13. Motor vehicle door having a supporting structure (26) and having an exterior door skin (27) which is arranged on the supporting structure (26), and having a handle arrangement (2) according to Claim 12.

14. Motor vehicle door according to Claim 13, **characterized in that** the exterior door skin (27) and/or the supporting structure (26) provide/provides a constituent part of the handle section (4), which constituent part absorbs the actuating force, and/or **in that** the cover flaps (8, 9) are arranged above and below the handle section (4) in relation to the vertical axis (28) of the motor vehicle.

15. Method for operating a cover flap arrangement (1) according to one of Claims 1 to 11, **characterized in that** the occurrence of a predefined user action, in particular of the approach of the hand of the user to the cover flap arrangement (1), is monitored by means of a sensor device (24), and **in that**, if the user action is detected, possibly after testing of further conditions, such as an authentication of the user, the cover flaps (8, 9) of the cover flap arrangement (1) are adjusted in a motorized manner into their respective exposing position, in particular at the same time, by means of a drive arrangement (19).

## Revendications

1. Dispositif de clapet d'obturation pour un dispositif de poignée (2) d'une porte de véhicule automobile (3), le dispositif de poignée (2) comportant une section de poignée (4) notamment oblongue avec une zone de préhension (5) et deux ouvertures de mise en prise (6, 7) disposées des deux côtés de la section de poignée (4) en direction de la zone de préhension (5) et le dispositif de clapet d'obturation (1) comportant deux clapets d'obturation (8, 9) pouvant respectivement être déplacés entre une position de recouvrement dans laquelle ils recouvrent respectivement à l'état encastré une ouverture de mise en prise (6, 7), notamment de façon étanche, et une position de libération dans laquelle ils libèrent respectivement à l'état encastré une ouverture de mise en prise (6, 7), un support (23) étant prévu pour loger au moins une partie des composants du dispositif de clapet d'obturation (1), un agencement d'entraînement (19) étant prévu pour le déplacement motorisé des clapets d'obturation (8, 9), l'agencement d'entraînement (19) comportant un moteur d'entraînement (20) et un engrenage d'avance (21) connecté en aval du moteur d'entraînement (20) et le support (23) recevant les clapets d'obturation (8, 9) ainsi que la totalité de l'agencement d'entraînement (19).

2. Dispositif de clapet d'obturation selon la revendication 1, **caractérisé en ce que** dans la position de recouvrement à l'état encastré, les clapets d'obturation (8, 9) sont respectivement disposés pour l'essentiel de façon plane avec une surface de paroi extérieure (10).

3. Dispositif de clapet d'obturation selon l'une quelconque des revendications précédentes, **caractérisé en ce que** dans la position de libération respective, les deux clapets d'obturation (8, 9) plongent dans la zone de préhension (5), notamment pivotent vers l'intérieur, lors du déplacement de la position de recouvrement respective.

4. Dispositif de clapet d'obturation selon l'une quelconque des revendications précédentes, **caractérisé en ce que** les mouvements de déplacement des clapets d'obturation (8, 9) présentent une composante de rotation et/ou une composante linéaire.

5. Dispositif de clapet d'obturation selon l'une quelconque des revendications précédentes, **caractérisé en ce qu'**un axe de pivotement (8a, 9a) est respectivement associé aux clapets d'obturation (8, 9) et que les clapets d'obturation (8, 9) peuvent être déplacés de façon à pivoter de façon correspondante, de préférence que les axes de pivotement (8a, 9a) sont disposés de façon opposée par rapport à la section de poignée (4), de façon davantage préférée que les axes de pivotement (8a, 9a) des clapets d'obturation (8, 9) sont respectivement disposés au niveau d'une zone de bordure, opposée par rapport à la section de poignée (4), de l'ouverture de mise en prise (6, 7) respective.

6. Dispositif de clapet d'obturation selon l'une quelconque des revendications précédentes, **caractérisé en ce que** la zone de préhension (5) est délimitée par une poignée concave (16), de préférence que la poignée concave (16) comporte des ouvertures articulées (17, 18) à travers lesquelles les clapets d'obturation (8, 9) sont articulés.

7. Dispositif de clapet d'obturation selon la revendication 6, **caractérisé en ce que** dans la position de libération, les clapets d'obturation (8, 9) recouvrent respectivement, notamment de façon étanche, une ouverture articulée (17, 18) dans la poignée concave (16) et/ou que dans la position de libération, les clapets d'obturation (8, 9) sont respectivement disposés pour l'essentiel de façon plane avec une surface de paroi de la poignée concave (16).

8. Dispositif de clapet d'obturation selon l'une quelconque des revendications précédentes, **caractérisé en ce que** les deux clapets d'obturation (8, 9) sont couplés en mouvement l'un avec l'autre, de préférence que les deux clapets d'obturation (8, 9) sont couplés en mouvement entre eux de telle sorte qu'ils atteignent respectivement simultanément leur position de recouvrement et/ou leur position de libération, de façon davantage préférée que les directions de pivotement des deux clapets d'obturation (8, 9) sont toujours opposées l'une par rapport à l'autre.

9. Dispositif de clapet d'obturation selon l'une quelconque des revendications précédentes, **caractérisé en ce que** les courses de déplacement des deux clapets d'obturation (8, 9) se distinguent l'une de l'autre dans leur ampleur entre la position de recouvrement respective et la position de libération respective et/ou que les clapets d'obturation (8, 9) présentent différentes géométries de recouvrement, notamment différentes surfaces de recouvrement.

10. Dispositif de clapet d'obturation selon l'une quelconque des revendications précédentes, **caractérisé en ce que** l'engrenage d'avance (21) est réalisé sous la forme d'une transmission à barres crantées, de préférence que l'engrenage d'avance (21) comporte deux barres crantées d'entraînement (22) s'engrenant respectivement de façon excentrée aux axes de pivotement (8a, 9a) des clapets d'obturation (8, 9) pour la transmission des mouvements d'entraînement.

11. Dispositif de clapet d'obturation selon l'une quelconque des revendications précédentes, **caractérisé en ce que** le support (23) met à disposition un composant de la section de poignée (4) absorbant la force d'actionnement et/ou que le support (23) met à disposition la poignée concave (16) délimitant la zone de préhension (5).

12. Dispositif de poignée d'une porte de véhicule automobile, une section de poignée (4) étant pourvue d'une zone de préhension (5) et de deux ouvertures de mise en prise (6, 7) disposées des deux côtés de la section de poignée (4) en direction de la zone de préhension (5) ainsi que d'un dispositif de clapet d'obturation (1) permettant de recouvrir les ouvertures de mise en prise (6, 7) selon l'une quelconque des revendications précédentes faisant partie du dispositif de poignée.

13. Porte de véhicule automobile avec une structure portante (26) et avec un revêtement extérieur de porte de structure portante (27) au niveau de la structure portante (26) ainsi qu'avec un dispositif de poignée (2) selon la revendication 12.

14. Porte de véhicule automobile selon la revendication 13, **caractérisée en ce que** le revêtement extérieur de porte (27) et/ou la structure portante (26) met à disposition un composant de la section de poignée (4) absorbant la force d'actionnement et/ou que les clapets d'obturation (8, 9) sont disposés au-dessus et en dessous de la section de poignée (4) par rapport à l'axe vertical (28) du véhicule automobile.

15. Procédé d'utilisation d'un dispositif de clapet d'obturation (1) selon l'une quelconque des revendications 1 à 11, **caractérisé en ce que** la présence d'une action d'utilisateur prédéterminée, notamment l'approche de la main de l'utilisateur auprès du dispositif de clapet d'obturation (1), est surveillée au moyen d'un dispositif de détection (24) et qu'en cas de détection de l'action de l'utilisateur, le cas échéant après vérification de conditions supplémentaires, par exemple une authentification de l'utilisateur, les clapets d'obturation (8, 9) du dispositif de clapet d'obturation (1) peuvent être déplacés de façon motorisée dans leur position de libération respective au moyen d'un agencement d'entraînement (19), notamment simultanément.
